# EUROPEAN PATENT SPECIFICATION

(11) **EP 0 947 360 B1**
(45) Date of publication and mention of the grant of the patent: **11.06.2003**
(21) Application number: 98204141.0
(22) Date of filing: 08.12.1998
(51) Int. Cl.: B60C 25/138

(54) **Tyre removal machine and relative accessories**
Reifendemontiervorrichtung und Zubehör
Machine pour le démontage de pneus et accessoires pour celle-çi

(30) Priority: 02.04.1998 IT RE980035
(43) Date of publication of application: 06.10.1999
(73) Proprietor: CORGHI S.p.A., I-42015 Correggio (Reggio Emilia) (IT)
(72) Inventor: Corghi, Remo, 42015 Correggio (Reggio Emilia) (IT)
(74) Representative: Corradini, Corrado

(56) References cited:
- EP-A- 0 644 071
- EP-A- 0 838 354
- IT-B- 1 210 394
- US-A- 4 173 245
- US-A- 5 337 817

## Description

This invention concerns machines for mounting and removing a tyre on and from its wheel rim, and in particular relates both to machines able to adapt to all currently available types of tyre and wheel rim, and to the optional accessories with which known machines can be provided.

Special tyres are known which ensure that the vehicle is able to travel even under low pressure conditions, ie when the tyre inflation pressure is very low or close to zero, as happens in the case of a puncture, such tyres being known hereinafter simply as special tyres.

These special tyres comprise not only the external carcass but also a separate toroidal support ring of elastomeric rubber, which is housed in an appropriate seat provided in the wheel rim well.

To enable the tyre and the toroidal support ring to be mounted on the wheel rim, both the wheel rim and the tyre are constructed with special profiles.

Specifically, the special tyre has different diameters at its beads, with the result that the wheel rim is not symmetrical about the plane passing through its centre, and furthermore comprises seats for receiving the different-diameter beads. In addition the beads of the special tyre have a much smaller thickness than those of known tyres, and are hence less resistant to mechanical stresses and more fragile than known beads.

These new special tyres are described in French patent applications FR 2 699 121 and FR 2 713 558.

To remove or mount these special tyres from or onto the wheel rim a procedure has to be used which cannot be followed by tyre removal machines of traditional type, because of the asymmetry of the tyre beads and the need to insert the toroidal ring.

IT U 230998 discloses a machine for removing and mounting tyres of known type.
Sai machine comprises a platform rotating on a base and provided with self-centering jaws for locking the wheel rim.

A vertical column close to said platform extends from the base, and means projectingly supported by said column are movable in the manner of a normal tyre removal tool both radially and vertically relative to the platform, and lockable in position.

At least one substantially horizontal arm is movable vertically relative to the column and is lockable in position; and actuator means arranged to raise and lower said arm.

Attempts to construct specific tyre removal machines for this type of tyre have been unsuccessful both for reasons of cost and because of the particular operating methods required.

The problem is solved according to this invention, by the provision of simple modifications to traditional machines and/or a group of accessories provided therewith.

Said group of accessories for tyre removal machines of traditional type comprises:
- a first assembly of removable means for receiving and fixing the wheel rim,
- means to be fixed to the rotary platform of the machine, to receive said wheel rim fixing means,
- means drivable in the direction of the wheel rim axis and arranged to press against the side of the tyre.

The operational and constructional characteristics of the invention will be more apparent from the ensuing description of a preferred embodiment thereof given by way of non-limiting example and illustrated on the accompanying drawings.
Figure 1 is a side view of a tyre removal machine on which the accessories of this invention are installed.
Figure 2 is a partly sectional view of the accessories of the invention in a first working position.
Figure 3 is a partly sectional view of the accessories of the invention in a second working position.

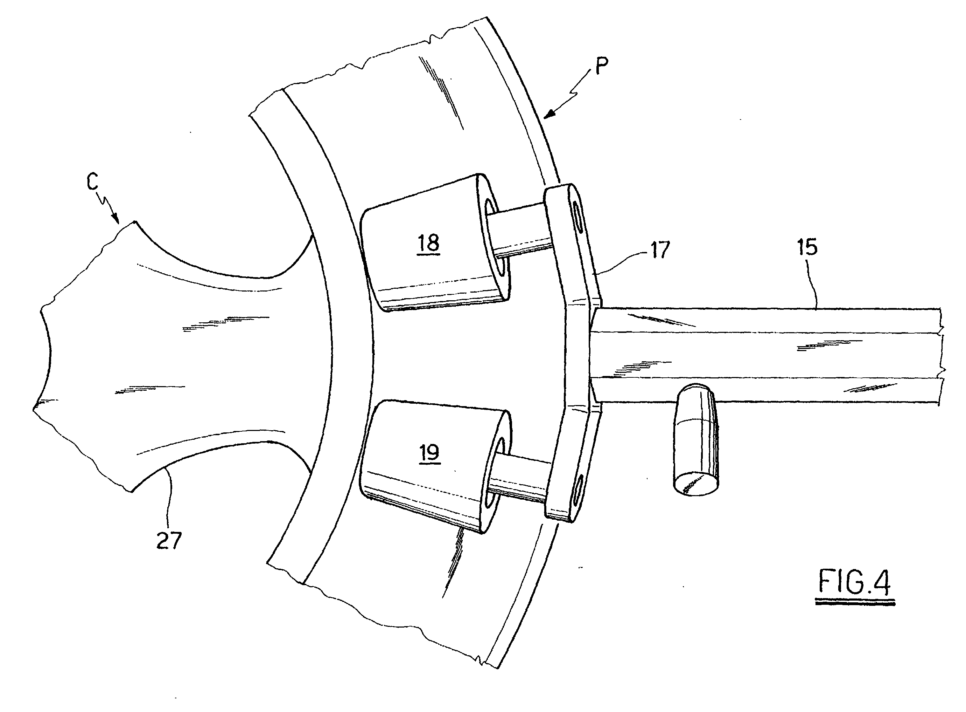

Figure 4 is an enlarged detailed view of the means for pressing against the side of the tyre.
Figures 5, 6, 7, 8 show the steps involved in mounting the special tyre onto the wheel rim using the accessories of the invention.

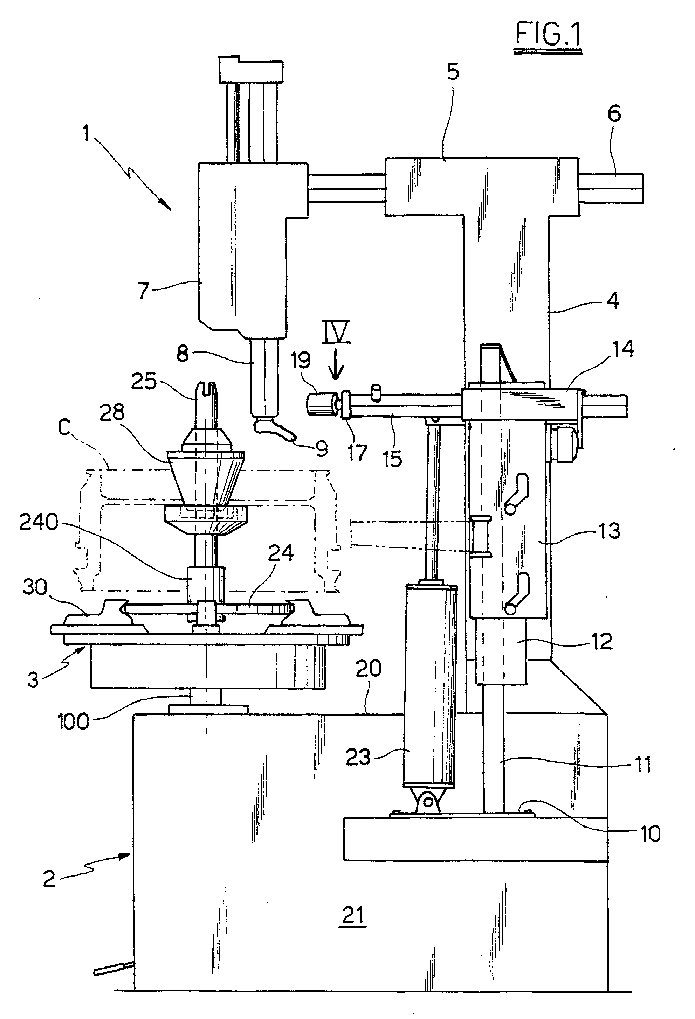

Said figures show the tyre removal machine indicated overall by 1 and comprising a base 2, from the upper surface 20 of which there emerges the shaft 100 of an electric motor, not shown, on which a usual self-centering device 3 is positioned. From the rear of the base 2 there extends a column 4, the end of which terminates with a tube 5 of horizontal axis having an internal prismatic cross-section within which a bar 6 slides. With reference to Figure 1, the front end of said prismatic bar 6 supports a sleeve 7 of vertical axis within which there slides a bar 8 of prismatic cross-section, to the lower end of which there is fixed the traditional tool 9 for removing the tyre P. Sliding of the bars 6 and 8 is facilitated by suitable counter-weights or springs, the bars being locked in their seats generally by constriction means.

On the lateral surface 21 of the base 2 there is applied a horizontal plate 10 from which a rod 11 upwardly extends.

Said rod 11 forms the guide element for a vertically slidable tubular member 12 on which there is mounted in a vertically slidable manner a second tubular member 13 upperly provided with a sleeve 14 of horizontal axis extending in a direction substantially radial to the self-centering device 3. Said sleeve 14 is arranged to receive a prismatic bar 15, to the end of which there is fixed a plate 17 on which two frusto-conical rollers 18 and 19 are idly and opposingly mounted, their function being to urge the beads 300 and 301 (or side walls) of the tyre into the seats 403 and 400 respectively of the wheel rim C.

Between the plate 10 and the upper end of the tubular member 13 there is interposed a double-acting cylinder-piston unit 23, of which the rod is hinged to the tubular member 13 and the cylinder is hinged to the plate 10 as shown in Figure 1.

The assembly and the operation of the aforedescribed parts is illustrated in the Utility Model IT U 230 998 in the name of the present applicant.

The self-centering device is provided with four identical radially slidable jaws 30 arranged to grip the edge of a wheel rim of traditional type.

According to the invention the jaws 30 grip a disc 24 provided with a central hub 240 of vertical axis and having a through hole 241 traversed by a diametrical pin 242 receiving a rod 25.

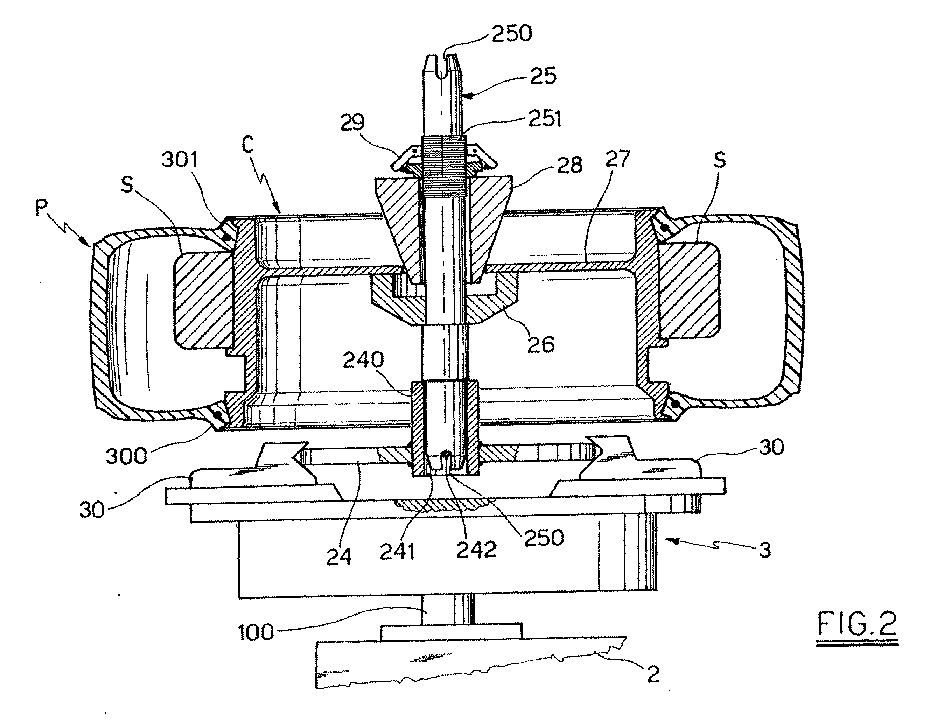

Specifically, the rod 25 has both its ends fork-shaped by virtue of the presence of a slot 250 for receiving the pin 242 of the hub 240. At about half way along its length, the rod 25 also supports a cup member 26 forming a circular ledge, on which there rests the disc 27 of the wheel rim C, as shown in Figure 2.

The wheel rim C is maintained rigid with the rod 25 by virtue of the cone member 28 and nut 29, of quick-locking type, which by being screwed onto the threaded portion 251 of the rod 25 maintains the member 28 in the position shown in Figure 2.

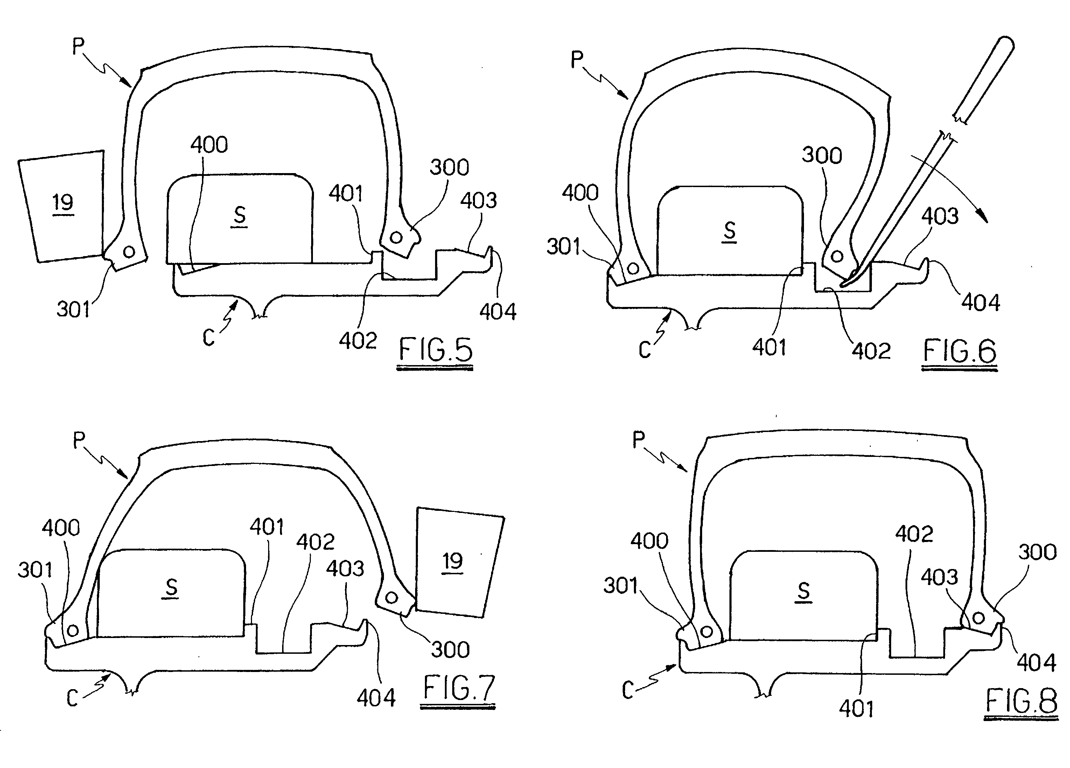

The operations to be carried out to mount the tyre P on the wheel rim C using the accessories of the invention are illustrated in Figures 5, 6, 7, 8.

Having rigidly locked the wheel rim C to the tyre removal machine 1 by the aforesaid means, and with the smaller-diameter edge facing upwards, the operator mounts onto the wheel rim C that bead 300 of the tyre P which is of greater diameter and the toroidal support ring S, after which by means of the cylinder-piston unit 23 the rollers 18 and 19 are brought into contact with the bead 301 of the tyre P. At this point the self-centering device 3 is rotated, the pressure exerted by the rollers 18 and 19 against the bead 301 of the tyre P then urging the bead 301 into the appropriate seat 400 of the wheel rim C. Simultaneously the support S moves until it rests against the relief edge 401 of the wheel rim C, and the bead 300 moves into its well 402.

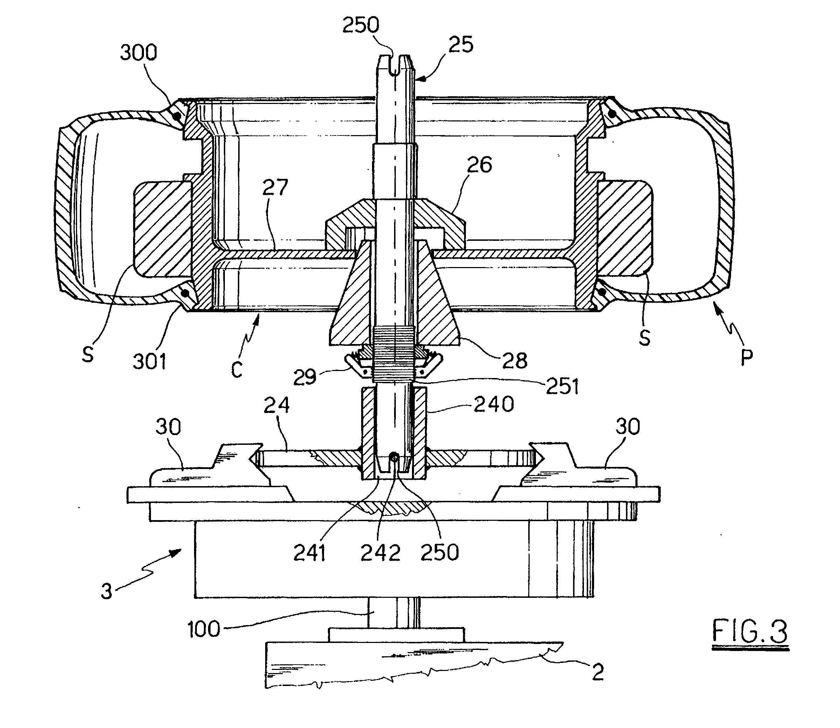

Having done this the operator inverts the wheel rim into the position shown in Figure 3, ie with the greater-diameter edge facing upwards.

To achieve this he raises the wheel rim while fixed to the rod 25, inverts the whole piece and reinserts the other end of the rod 25 into the hub 240 of the disc 24.

When in this position the operator extracts the bead 301 from the well 402 in the wheel rim C and moves it outside the wheel rim as shown in Figures 6 and 7.

Using a suitable lever, the operator extracts a portion of the bead 300 from the wheel rim C to create a gap between the bead 300 and the edge 404 of the wheel rim, into which gap he inserts the tool 9, after which he rotates the self-centering device to cause the entire bead 300 to withdraw from the wheel rim C, into the position shown in Figure 7.

As a result of this inversion, the bead 300 lies above the edge of the wheel rim.

To complete the mounting of the tyre P onto the wheel rim C the operator has to insert the bead 300 into the seat 403 of the wheel rim C. To achieve this the cylinder-piston unit 23 is operated to move the rollers 18 and 19 into contact with the bead 300 of the tyre P, the self-centering device 3 is rotated, and the pressure exerted by the rollers on the bead 300 forces it into the appropriate seat 403 of the wheel rim C.

The tyre is removed from the wheel rim in the following manner:
- the tyre is deflated,
- the wheel rim and rod 25 are inserted into the hub 240 with the smaller-diameter bead facing upwards, with reference to Figure 2,
- using the cylinder-piston unit 23 the rollers 18 and 19 are brought into contact with bead 301 of the tyre P. At this point, by pressing against the bead edge with the rollers 18 and 19, a gap is formed into which a usual lever is inserted to extract a portion of the bead 301 from the wheel rim C,
- the wheel is then inverted in the aforesaid manner,
- the rollers 18 and 19 are brought into contact with the tyre lateral wall and the self-centering device 3 is rotated to move the bead 300 beyond the relief edge 401,
- at this point the tyre P leaves the wheel rim C.

It should be noted that the hub 240 can be mounted directly on the shaft 100 without interposing the self-centering device 3, in which case the resultant tyre removal machine is able to operate only on the described type of special tyre.

## Claims

1. A machine for removing and mounting tyres from and onto their wheel rim, comprising a platform (3) rotating on a base (2) and provided with self-centering jaws (30) for locking the wheel rim; a vertical column (4) close to said platform and extending from the base; means (9) projectingly supported by said column and movable in the manner of a normal tyre removal tool both radially and vertically relative to the platform, and lockable in position; at least one substantially horizontal arm (15) movable vertically relative to the column and lockable in position; and actuator means (23) arranged to raise and lower said arm; **characterised in that** a central hub (240) is associated to the rotary platform and comprises, coaxial with the platform, a through hole (241) provided with a diametrical pin (242) and arranged to receive one of the two ends of a rod (25) having a slot (240), provided with means for fixing and supporting the wheel rim.

2. A machine as claimed in claim 1, **characterized by** comprising a disc (24) provided with the central hub (240), the through hole (241) of which is provided with the diametrical pin (242) and is arranged to receive one of the two ends of a rod (25) provided with means for fixing and supporting the wheel rim.

3. A machine as claimed in the preceding claims, **characterized in that** said rod (25) has both its ends tapered and fork- shaped for its insertion into the cavity of said hub and for receiving within said fork the diametrical pin (242) of said hub.

4. A machine as claimed in the preceding claims, **characterized in that** said rod comprises in its central region a circular ledge (26) and a threaded portion (251) adjacent thereto, to receive a centering cone (28) and a quick-manipulation nut (29).

5. A machine as claimed in the preceding claims, **characterized in that** at the end of said vertically movable horizontal arm (15) there is provided a pair of idle conical rollers (19) with their axes converging towards the central axis of the rotary platform, and which by pressing against the side of the tyre form a gap between the bead and the edge of the wheel rim such as to enable the usual bead raising tool to be inserted.

6. A machine as claimed in claim 5, **characterized in that** said vertically movable arm (15) carries only one idle roller (19), the axis of which is dose to the central axis of the rotary platform.

7. A group of accessories for a tyre removal machine, comprising a disc (24) able to be locked onto the self-centering means (30) of the usual rotary platform (3) of the tyre removal machine, and provided with a central hub (240), the through hole (241) of which is provided with a diametrical pin (242) and is arranged to receive and lock one of the two ends of a rod (25) provided with means for fixing and supporting the wheel rim.

8. A group as claimed in claim 7, **characterised in that** the rod (25) has both its ends forked-shaped for its insertion into the cavity of said hub and for receiving within said fork the transverse pin of said hub.

9. A group as claimed in claim 8, **characterized in that** said rod comprises in its central region a circular ledge (26) and a threaded portion (251) adjacent thereto, to receive a centering cone (28) and a quick-manipulation nut (29).

## Patentansprüche

1. Maschine zur Demontage und Montage von Reifen von und auf deren Radfelge, mit einer sich auf einer Basis (2) drehenden Plattform (3) mit selbstzentrierenden Klemmbacken (30) zum Arretieren der Radfelge; einer sich von der Basis erstreckenden vertikalen Säule (4) in der Nähe der Plattform; einer von der Säule hervorstehend getragenen Einrichtung (9), die wie ein normales Reifendemontagewerkzeug sowohl radial als auch vertikal im Verhältnis zu der Plattform bewegbar und in ihrer Position arretierbar ist; mindestens einem im Wesentlichen horizontalen und im Verhältnis zu der Säule vertikal bewegbaren und in seiner Position arretierbaren Arm (15); und einer Stellgliedeinrichtung (23), die zum Heben und Senken des Armes vorgesehen ist;
**dadurch gekennzeichnet, dass**
eine zentrale Nabe (240) mit der Drehplattform verbunden ist und ein koaxial zu der Plattform verlaufendes Durchgangsloch (241) aufweist, das mit einem Querstift (242) versehen ist, und die dafür vorgesehen ist, eines der zwei Enden einer Stange (25) mit einem Schlitz (250) aufzunehmen, der Einrichtungen zur Fixierung und zum Tragen der Radfelge aufweist.

2. Maschine nach Anspruch 1,
**dadurch gekennzeichnet, dass**
sie eine Scheibe (24) aufweist, die mit der zentralen Nabe (240) versehen ist, deren Durchgangsloch (241) mit dem Querstift (242) versehen ist, und die dafür vorgesehen ist, eines der zwei Enden einer Stange (25) aufzunehmen, die Einrichtungen zur Fixierung und zum Tragen der Radfelge aufweist.

3. Maschine nach einem der vorangegangenen Ansprüche,
**dadurch gekennzeichnet, dass**
beide Enden der Stange (25) kegelig und gabelförmig sind, um in den Hohlraum der Nabe eingesetzt zu werden und innerhalb der Gabel den Querstift (242) der Nabe aufzunehmen.

4. Maschine nach einem der vorangegangenen Ansprüche,
**dadurch gekennzeichnet, dass**
die Stange in ihrem Zentralbereich eine kreisförmige Kante (26) und einen daran angrenzenden Gewindeabschnitt (251) aufweist, um einen Zentrierungskegel (28) und eine Schnellspannmutter (29) aufzunehmen.

5. Maschine nach einem der vorangegangenen Ansprüche,
**dadurch gekennzeichnet, dass**
an dem Ende des vertikal bewegbaren Horizontalarmes (15) ein Paar freilaufender kegeliger Rollen (19) vorgesehen ist, deren Achsen in Richtung der Mittelachse der Drehplattform zusammenlaufen und die durch Drücken gegen die Seite des Reifens einen Spalt zwischen dem Wulst und der Kante der Radfelge bilden, so dass das gewöhnliche Wulsthebewerkzeug eingeführt werden kann.

6. Maschine nach Anspruch 5,
**dadurch gekennzeichnet, dass**
der vertikal bewegbare Arm (15) nur eine Freilaufrolle (19) trägt, deren Achse in der Nähe der Mittelachse der Drehplattform liegt.

7. Zubehörgruppe für eine Reifendemontagemaschine, mit einer Scheibe (24), die auf den selbstzentrierenden Einrichtungen (30) der gewöhnlichen Drehplattform (3) der Reifendemontagemaschine arretiert werden kann und mit einer zentralen Nabe (240) versehen ist, deren Durchgangsloch (241) mit dem Querstift (242) versehen ist, und die dafür vorgesehen ist, eines der zwei Enden einer Stange (25) aufzunehmen und zu arretieren, die Einrichtungen zur Fixierung und zum Tragen der Radfelge aufweist.

8. Gruppe nach Anspruch 7,
**dadurch gekennzeichnet, dass**
beide Enden der Stange (25) gabelförmig sind, um in den Hohlraum der Nabe eingesetzt zu werden und innerhalb der Gabel den Querstift der Nabe aufzunehmen.

9. Gruppe nach Anspruch 8,
**dadurch gekennzeichnet, dass**
die Stange in ihrem Zentralbereich eine kreisförmige Kante (26) und einen daran angrenzenden Gewindeabschnitt (251) aufweist, um einen Zentrierungskegel (28) und eine Schnellspannmutter (29) aufzunehmen.

## Revendications

1. Machine d'extraction de pneumatiques de leur jante de roue et de montage sur cette jante, comprenant une plate-forme (3) qui tourne sur une base (2) et ayant des mâchoires (30) à centrage automatique destinées à bloquer la jante de roue, une colonne verticale (4) proche de la plate-forme et s'étendant depuis la base, un dispositif (9) supporté par la colonne dont il dépasse et mobile de la même manière qu'un outil normal d'extraction de pneumatique à la fois radialement et verticalement par rapport à la plate-forme et qui peut être bloqué en position, au moins un bras pratiquement horizontal (15) mobile verticalement par rapport à la colonne et qui peut être bloqué en position, et un dispositif (23) à organe de manoeuvre destiné à lever et baisser le bras, **caractérisée en ce qu'**un moyeu central (240) est associé à la plate-forme rotative et comprend un trou débouchant (241) coaxial à la plate-forme, ayant une broche diamétrale (242) et destiné à loger l'une des deux extrémités d'une tige (25) ayant une fente (240), munie d'un dispositif de fixation et de support de la jante de roue.

2. Machine selon la revendication 1, **caractérisée en ce qu'**elle comprend un disque (24) associé au moyeu central (240) dont le trou débouchant (241) possède la broche diamétrale (242) et est destiné à loger l'une des deux extrémités d'une tige (25) ayant un dispositif de fixation et de support de la jante de roue.

3. Machine selon les revendications précédentes, **caractérisée en ce que** les deux extrémités de la tige (25) ont une forme tronconique et une forme de fourche permettant son insertion dans la cavité du moyeu et le logement de la broche diamétrale (242) du moyeu dans la fourche.

4. Machine selon l'une des revendications précédentes, **caractérisée en ce que** la tige comprend, dans sa partie centrale, un rebord circulaire (26) et une région filetée (251) adjacente au rebord, pour la coopération avec un cône de centrage (28) et un écrou (29) à manipulation rapide.

5. Machine selon les revendications précédentes, **caractérisée en ce que**, à l'extrémité du bras horizontal (15) mobile verticalement, est placée une paire de rouleaux coniques fous (19) dont les axes convergent vers l'axe central de la plate-forme rotative et qui, par pression contre le flanc du pneumatique, forment un espace entre le talon et le bord de la jante de roue pour permettre à l'outil habituel de soulèvement de talon d'être inséré.

6. Machine selon la revendication 5, **caractérisée en ce que** le bras mobile verticalement (15) ne porte qu'un rouleau fou (19) dont l'axe est proche de l'axe central de la plate-forme rotative.

7. Groupe d'accessoires destinés à une machine d'extraction de pneumatiques, comprenant un disque (24) qui peut être bloqué sur le dispositif de centrage automatique (30) de la plate-forme rotative habituelle (3) de la machine de démontage de pneumatiques, et ayant un moyeu central (240) dont le trou débouchant (241) a une broche diamétrale (242) et est destiné à loger et bloquer l'une des deux extrémités d'une tige (25) munie d'un dispositif de fixation et de support de la jante de roue.

8. Groupe selon la revendication 7, **caractérisé en ce que** la tige (25) a ses deux extrémités en forme de fourche permettant son insertion dans la cavité du moyeu et le logement de la broche transversale du moyeu dans la fourche.

9. Groupe selon la revendication 8, **caractérisé en ce que** la tige comprend, dans sa région centrale, un rebord circulaire (26) et une partie filetée (251) qui lui est adjacente, pour le logement d'un cône de centrage (28) et d'un écrou (29) de manipulation rapide.
